# EUROPEAN PATENT SPECIFICATION

(11) **EP 2 654 451 B1**
(45) Date of publication and mention of the grant of the patent: **13.04.2016**
(21) Application number: 11799524.1
(22) Date of filing: 23.11.2011
(51) Int. Cl.: A23K 50/40, A23K 20/10, A23K 20/121

(54) **PET FOOD COMPOSITIONS FOR INDUCING A SATIETY RESPONSE**
TIERNAHRUNGSZUSAMMENSETZUNGEN ZUR HERBEIFÜHRUNG EINER SÄTTIGUNGSREAKTION
COMPOSITIONS D'ALIMENTS POUR ANIMAUX DE COMPAGNIE PERMETTANT D'INDUIRE UNE RÉPONSE DE SATIÉTÉ

(30) Priority: 20.12.2010 US 201061424997 P
(43) Date of publication of application: 30.10.2013
(60) Divisional application: 15172960.5
(73) Proprietor: Hill's Pet Nutrition, Inc., Topeka, KS 66603 (US)
(72) Inventor: AL-MURRANI, Samer, Topeka Kansas 66614 (US)
(74) Representative: Daniels, Jeffrey Nicholas
(86) International application number: PCT/US2011/061997
(87) International publication number: WO 2012/087486

(56) References cited:
- EP-A1- 1 544 281
- EP-A1- 1 967 197
- WO-A1-2005/014020
- WO-A1-2005/060954
- WO-A1-2008/103180
- WO-A2-01/60319
- GB-A- 2 462 484
- US-A1- 2005 271 603
- SERISIER, S., ET AL.: "Effects of green tea on insulin sensitivity, lipid profile and expression of PPAR-alpha and PPAR-gamma and their target genes in obese dogs", BRITISH JOURNAL OF NUTRITION., vol. 99, no. 6, 2008, pages 1208-1216, XP002668343, CAMBRIDGE UNIVERSITY PRESS, CAMBRIDGE ISSN: 0007-1145
- NOORAH, S. AL-SOWYAN: "Difference in leptin hormone response to nutritional status in normal adult male albino rats", PAKISTAN JOURNAL OF BIOLGICAL SCIENCE, vol. 12, no. 2, 2009, pages 119-126, XP002668344, ISSN: 1028-8880
- KAO Y-H ET AL: "Modulation of endocrine systems and food intake by green tea epigallocatechin gallate", ENDOCRINOLOGY, ENDOCRINE SOCIETY, US, vol. 141, no. 3, 1 March 2000 (2000-03-01) , pages 980-987, XP001154723, ISSN: 0013-7227, DOI: 10.1210/EN.141.3.980
- OUDART H ET AL: "INVOLVEMENT OF BROWN ADIPOSE TISSUE IN THE LIMITING EFFECT OF N-3 POLYUNSATURATED FATTY ACIDS IN OBESITY INDUCED BY A HIGH-FAT FIET IN THE RAT", PROCEEDINGS OF THE NUTRITION SOCIETY, LONDON, GB, vol. 55, no. 1, 10 July 1995 (1995-07-10), page 109A, XP001073528, ISSN: 0029-6651
- LI L ET AL: "Simultaneous determination of luteolin and apigenin in dog plasma by RP-HPLC", JOURNAL OF PHARMACEUTICAL AND BIOMEDICAL ANALYSIS, NEW YORK, NY, US, vol. 37, no. 3, 9 March 2005 (2005-03-09), pages 615-620, XP004766231, ISSN: 0731-7085, DOI: 10.1016/J.JPBA.2004.11.012

## Description

### FIELD OF THE INVENTION

The present invention relates to the dietary control of appetite in animals, particularly companion animals, such as dogs. Pet food, pet food additives and methods of feeding are provided which allow a caregiver to dispense larger quantities of food than should be consumed by the animal in one meal with the result that the animal consumes an appropriate dietary amount without the need for intervention by the caregiver to remove the food from the animal's area or otherwise deny the animal access to the source of food between feeding times.

### BACKGROUND OF THE INVENTION

Excessive food intake and its deleterious effects on body mass are well known. Over time, excessive food intake produces a net caloric surplus that is stored in the fat of the animal. The accumulation of excess body fat has negative consequences both on the gross level, such that the overall appearance of the animal does not conform to generally accepted morphological standards, and on the metabolic level, such that the overall health prospects of the animal may be compromised, i.e., due to stress on organ systems in the case of morbid obesity and its co-morbid conditions, such as diabetes.

Nutritional approaches that are based upon restricting the caloric intake of animals are known to have positive effects on health and average body weight. However, these approaches require active intervention on the part of humans to dispense a controlled amount of food at defined intervals. Otherwise, animals given continuous access to a food source (fed "*ad libitum*") will continue consumption until the onset of satiety. However, the onset of satiety in response to food consumption is usually a gradual or delayed response which will routinely lead to consumption of more than the desired caloric limit.

Most companion animal diets that are currently on the market rely on calorie control as the means to weight loss. This approach essentially relies on brute force to control weight and relies heavily on compliance from the animal's guardian to ensure that the animal gets exactly what is required and no more. In essence, a companion animal fed *ad libitum* on a diet that relies on calorie restriction will still gain weight.

In a review by Kamiji and Inui (Endocrine Reviews, 28(6):664-684) the authors stated that NPY is a 36-amino acid neuropeptide member of the pancreatic polypeptide (PP) family.

Liping Li et al. Journal of Pharmaceutical and Biomedical Analysis 37 (2005) 615-620, describes a method for determination of luteolin and apigenin in dog plasma after feeding dogs Chrysanthemum morifolium extract.
That includes Peptide YY (PYY) and PP. NPY is the most abundant and widely distributed peptide in the central nervous system of both rodents and humans. Within the hypothalamus, NPY plays an essential role in the control of food intake and body weight. Centrally administered NPY causes robust increases in food intake and body weight and, with chronic administration, can eventually produce obesity.

The biological actions of NPY are mediated by receptors derived from three Y receptor genes leading to the Y1, Y2 and Y5 subfamilies. All three play a role in the regulation of feeding behavior. Recent studies have shown that when NPY expression in the hypothalamus was inhibited, the treated animals released 50% less NPY, gained less weight and ate less than the controls up to 50 days after treatment (Beck, B., Phil. Trans. R, Soc. B (2006) 361, 1159-1185).

The most important factor that influences the hypothalamic content of NPY is food deprivation. Chronic food restriction induces similar changes and refeeding rapidly returns the abundance of NPY in the hypothalamus to initial values. Blood glucose concentrations also influence the expression of NPY. Furthermore, decreasing leptin levels in the blood by fasting leads to an increase in NPY expression. Additionally, gene therapy that restores leptin receptor expression in a model rat leads to a significant reduction in NPY mRNA levels pointing to a link between the leptin receptor and NPY expression (Beck, B., Phil. Trans. R, Soc. B (2006) 361, 1159-1185).

### BRIEF SUMMARY OF THE INVENTION

The invention provides a pet food composition comprising luteolin for use in inducing a satiety response in an animal, wherein the use comprises feeding the animal the composition, wherein the luteolin is in an amount effective to decrease expression of one or more genes selected from NPY and NPY receptors, and/or to increase expression of one or more genes selected from leptin and leptin receptors.

The invention further provides a pet food composition comprising luteolin for use in controlling the amount of food intake of an animal, wherein the use comprises feeding the animal the composition, wherein the luteolin is in an amount effective to decrease expression of one or more genes selected from NPY and NPY receptors, and to increase expression of one or more genes selected from leptin and leptin receptors.

In a further aspect, the invention provides a pet food composition comprising luteolin in an amount effective to induce a satiety response in an animal weighing from 2 kg to 60 kg, wherein the amount is effective to decrease expression of one or more genes selected from NPY and NPY receptors and/or to increase expression of one or more genes selected from leptin and leptin receptors, and wherein the luteolin is in an amount of 0.0003 mg to 0.1 mg.

This concept rests on the idea of making companion animals, particularly dogs, want to eat less. The advantages over calorie restriction are many. The dog would self-regulate and comply without interference from the guardian. Furthermore, the food could be offered *ad libitum* because even if it is offered beyond what is recommended based on calories, the dog would not have the appetite to consume more.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### DETAILED DESCRIPTION OF THE INVENTION

The following description of the preferred embodiments is merely exemplary in nature and is in no way intended to limit the invention, its application, or uses.

The targets for this diet are the hormone NPY and its receptors, and leptin and its receptors. Applicants have identified ingredients that modulate gene expression of NPY, leptin and/or their receptors, and are thus useful as satiety inducing agents in pet food.

Satiety refers to satisfaction of the need for nutrition and the extinguishment of the sensation of hunger, which is often described as "feeling full". The satiety response refers to behavioral characteristics observed to be consistent with having consumed a sufficient amount of food, such as an abrupt or a tapered down cessation of eating. However, the biological mechanisms which lead to the satiety response are often triggered in a gradual or delayed manner, such that they are usually out of phase with the amount of food taken in by the animal prior to cessation, which results in the animal consuming more nutritional content than is appropriate for the animal. Satiety inducing agents produce an accelerated onset of the satiety response, i.e., pet food compositions containing satiety inducing agents will trigger the satiety response at an earlier point in time than would a similar pet food composition without the satiety inducing agent.

The invention thus provides in one embodiment, a pet food composition (Composition 1) comprising a satiety inducing agent, wherein the satiety inducing agent is luteolin, in an amount effective to induce a satiety response in an animal weighing 2 kg to 60 kg, wherein the satiety inducing agent is effective to modulate expression of one or more of the hormone NPY and its receptors, and leptin and its receptors,
e.g., wherein the satiety inducing agent increases expression of leptin and/or its receptors, and/or wherein the satiety inducing agent decreases expression of NPY and/or its receptors;
e.g., wherein the genes modulated are selected from NPY1R and NPY5R.

The description further provides a satiety inducing agent selected from epigallocatechin gallate and EPA.

In some embodiments, the animal is a dog.

The invention further provides a pet food composition comprising luteolin for use in inducing a satiety response in an animal, wherein the use comprises feeding the animal the composition, wherein the luteolin is in an amount effective to decrease expression of one or more genes selected from NPY and NPY receptors, and/or to increase expression of one or more genes selected from leptin and leptin receptors.

The pet food composition may be formulated to deliver the nutritional requirements of animals in the size and age class appropriate to the animal.

The invention further provides a pet food composition comprising luteolin for use in controlling the amount of food intake of an animal, wherein the use comprises feeding the animal the composition, wherein the luteolin is in an amount effective to decrease expression of one or more genes selected from NPY and NPY receptors, and to increase expression of one or more genes selected from leptin and leptin receptors.

The description further provides the use of a pet food composition ingredient selected from the group consisting of epigallocatechin gallate and EPA to control the amount of food intake of an animal, or in the manufacture of a pet food to induce a satiety response of an animal.

.

Pet food compositions of the present invention (particularly foods) can be prepared in a canned or wet form using conventional pet food processes. Typical requirements for a nutritionally adequate food composition are: carbohydrate, 0 to about 90%, illustratively about 5% to about 45%, by weight; protein, about 5% to about 70%, illustratively about 10% to about 60%, by weight; fat, about 2% to about 50%, illustratively about 5% to about 40%, by weight; total dietary fiber, about 0.1 % to about 20%, illustratively about 1% to about 11%, by weight; and nutritional balancing agents such as vitamins and minerals, 0 to about 15%, illustratively about 2% to about 8%, by weight. To these ingredients are added one or more satiety inducing agents in accordance with the invention.

Vitamins and minerals should be included in amounts required to avoid deficiency and maintain health. AAFCO provides recommendations for dogs in the American Feed Control Officials, Inc. Official Publication (2003), at pp. 126-240.

The effective amount of satiety inducing agent is determined by one skilled in the art by conducting a designed set of experiments in which animals are fed a selected range of satiety inducing agent. The ranges of satiety inducing agent should be adjusted for animal body weight, and separate tests can be conducted for animals in the conventional weight classes for the animal to determine amounts to formulate into a finished pet food composition. For example, in the case of dogs, food is generally prepared according to different specifications for dogs of different size classes. For example, according to a typical feeding system, a small dog is generally up to about 15 kg, a medium dog is generally from about 15 to 25 kg pounds and a large dog is over 25 kg. Accordingly, the starting and end point amounts on the range for screening in medium dogs should be approximately twice that for small dogs and the starting and end point concentration in large dogs should be approximately three times that for small dogs. In addition, dogs are generally divided into age-related nutritional classes. For example, puppy denotes a dog under one year, adult indicates ages of one to six years and mature adult refers to dogs of seven years and older.

Suitable starting point amounts of the satiety inducing agents can also be calculated based upon cell line screening data, such as that provided in Example 1. An estimate of a suitable starting point, for example, can be calculated as follows: Take the weight of a dog in kilograms and multiply by a factor of 0.6 to arrive at an estimate of the amount of liters of water present in the dog (the density of water is 1). Using the amount tested in the cell line, assume 100% dissolves in the water, and multiply the amount tested in the cell lines by the amount of liters of water present in the dog. For a 20 kg dog: 20kg X 0.6L/kg =12Liters =12,000mL. A suitable amount of the ingredient would = 0.005 mg/mL x (12,000mL) = 6 milligrams. Exemplary amounts for epigallocatechin gallate, EPA and luteolin are shown in Tables 1-3:

**Table 1- Epigallocatechin Gallate**

| **Weight (kg)** | **Amount tested (mg/mL)** | **Effective amount in composition (mg)** |
|---|---|---|
| 2 | 2 X 10⁻⁵, 8 X 10⁻⁵ | 0.02, 0.1 |
| 5 | 2 X 10⁻⁵, 8 X 10⁻⁵ | 0.06, 0.2 |
| 10 | 2 X 10⁻⁵, 8 X 10⁻⁵ | 0.1,0.5 |
| 15 | 2 X 10⁻⁵, 8 X 10⁻⁵ | 0.2, 0.7 |
| 20 | 2 X 10⁻⁵, 8 X 10⁻⁵ | 0.2, 1.0 |
| 25 | 2 X 10⁻⁵, 8 X 10⁻⁵ | 0.3, 1.2 |
| 30 | 2 X 10⁻⁵, 8 X 10⁻⁵ | 0.4, 1.4 |
| 35 | 2 X 10⁻⁵, 8 X 10⁻⁵ | 0.4, 1.7 |
| 40 | 2 X 10⁻⁵, 8 X 10⁻⁵ | 0.5, 2.0 |
| 45 | 2 X 10⁻⁵, 8 X 10⁻⁵ | 0.5, 2.2 |
| 50 | 2 X 10⁻⁵, 8 X 10⁻⁵ | 0.6, 2.4 |
| 55 | 2 X 10⁻⁵, 8 X 10⁻⁵ | 0.7, 2.6 |
| 60 | 2 X 10⁻⁵, 8 X 10⁻⁵ | 0.7, 2.9 |

**Table 2-EPA**

| **Weight (kg)** | **Amount tested (mg/mL)** | **Effective amount in composition (mg)** |
|---|---|---|
| 2 | 0.005, 0.025 | 6, 30 |
| 5 | 0.005, 0.025 | 15, 75 |
| 10 | 0.005, 0.025 | 30, 150 |
| 15 | 0.005, 0.025 | 45, 225 |
| 20 | 0.005, 0.025 | 60, 300 |
| 25 | 0.005, 0.025 | 75, 375 |
| 30 | 0.005, 0.025 | 90, 450 |
| 35 | 0.005, 0.025 | 105, 525 |
| 40 | 0.005, 0.025 | 120, 600 |
| 45 | 0.005, 0.025 | 135, 675 |
| 50 | 0.005, 0.025 | 150, 750 |
| 55 | 0.005, 0.025 | 165, 825 |
| 60 | 0.005, 0.025 | 180, 900 |

**Table 3-Luteolin**

| **Weight (kg)** | **Amount tested (µM)** | **Amount tested (mg/mL)*** | **Effective amount in composition (mg)** |
|---|---|---|---|
| 2 | 1, 10 | 286.24 X 10⁻⁹, 286.24 X 10⁻⁸ | 0.0003, 0.003 |
| 5 | 1, 10 | 286.24 X 10⁻⁹, 286.24 X 10⁻⁸ | 0.0009, 0.009 |
| 10 | 1, 10 | 286.24 X 10⁻⁹, 286.24 X 10⁻⁸ | 0.002, 0.02 |
| 15 | 1, 10 | 286.24 X 10⁻⁹, 286.24 X 10⁻⁸ | 0.003, 0.03 |
| 20 | 1, 10 | 286.24 X 10⁻⁹, 286.24 X 10⁻⁸ | 0.003, 0.03 |
| 25 | 1, 10 | 286.24 X 10⁻⁹, 286.24 X 10⁻⁸ | 0.004, 0.04 |
| 30 | 1, 10 | 286.24 X 10⁻⁹, 286.24 X 10⁻⁸ | 0.005, 0.05 |
| 35 | 1, 10 | 286.24 X 10⁻⁹, 286.24 X 10⁻⁸ | 0.006, 0.06 |
| 40 | 1, 10 | 286.24 X 10⁻⁹, 286.24 X 10⁻⁸ | 0.007, 0.07 |
| 45 | 1, 10 | 286.24 X 10⁻⁹, 286.24 X 10⁻⁸ | 0.008, 0.08 |
| 50 | 1, 10 | 286.24 X 10⁻⁹, 286.24 X 10⁻⁸ | 0.009, 0.09 |
| 55 | 1, 10 | 286.24 X 10⁻⁹, 286.24 X 10⁻⁸ | 0.009, 0.09 |
| 60 | 1, 10 | 286.24 X 10⁻⁹, 286.24 X 10⁻⁸ | 0.01, 0.1 |

| | | | |
|---|---|---|---|
| *Conversion factor: µM=µmol/L; Molecular weight of luteolin=286.24 g/mol; for 1 µM, amount tested= 1µmol/L*286.24g/mol* 1mol/10⁶* 1L/1000mL=286.24 X 10⁻⁹ mg/mL | | | |

Effective amounts of epigallocatechin gallate for an animal weighing 2 kg to 60 kg are in the range of 0.02 mg to 2.9 mg. An effective amount for an animal weighing less than 2 kg or more than 60 kg can be calculated as described above.

Effective amounts of EPA for an animal weighing 2 kg to 60 kg are in the range of 6 mg to 900 mg. An effective amount for an animal weighing less than 2 kg or more than 60 kg can be calculated as described above.

Effective amounts of luteolin for an animal weighing 2 kg to 60 kg are in the range of 0.0003 mg to 0.1 mg. An effective amount for an animal weighing less than 2 kg or more than 60 kg can be calculated as described above.

As used throughout, ranges are used as shorthand for describing each and every value that is within the range. Any value within the range can be selected as the terminus of the range. In addition, all references cited herein are hereby incorporated by referenced in their entireties. In the event of a conflict in a definition in the present disclosure and that of a cited reference, the present disclosure controls.

Unless otherwise specified, all percentages and amounts expressed herein and elsewhere in the specification should be understood to refer to percentages by weight. The amounts given are based on the active weight of the material.

### EXAMPLE 1-SCREENING

### Affymetrix Genechip Expression Analysis

Gene expression was analyzed using Affymetrix Canine 1 and Canine 2 GeneChip® Arrays available commercially from Affymetrix, Inc., Santa Clara, CA 95051. Total RNA is reverse transcribed into cDNA. The cDNA is used to generate cRNA which is fragmented and used as probes for GeneChip hybridization. The gene chip is washed and the hybridization signal is measured with an Affymetrix laser scanner. The hybridization data is then validated and normalized for further analysis.

Materials: Affymetrix provided most of the reagents and kit. Other reagents listed in the Affymetrix Manual but not supplied in the kit were obtained separately. Refer to GeneChip Expression Analysis Technical Manual (701021 Rev.4) for the details.

Equipment: Eppendorf Microcentrifuge, 1.5mL DNase and RNase free/sterile microcentrifuge tubes, 50mL DNase and RNase free/sterile disposable polypropylene tubes, P1000, P200, P20, P10 and P2 Rainin Pipetman pipettes, Filter pipette tips for P1000, P200, P20, P10 and P2 pipettes, DNase and RNase free/sterile, and Peltier Thermal Cycler PTC-200.

Procedure: All procedures followed exactly as described in GeneChip Expression Analysis Technical Manual (Affymetrix Copyright 1999-2003). 5 micrograms of total RNA were used for the first strand cDNA synthesis. Used either Peltier Thermal Cycler PTC-200 or heat block for temperature control on reactions and probe denaturing. The quality control was performed using RNA NanoDrop chips with BioAnalyer 2100. Used 100 Format (Midi Array) for the canine genechip.

Affymetrix canine gene chips Canine-1 and Cahine-2 are used to determine the effect of various test substances or ingredients on gene expression in four canine cell lines and appropriate controls. Each ingredient was tested in two concentrations as illustrated for selected sample ingredients shown in Table 4. The solvent at the higher of the two concentrations was used as a control. Four canine cell lines are used: CCL-34 (Kidney), CCL-183 (Bone), CRL-1430 (Thymus) (Obtained from The American Tissue Culture Collection) and CTAC (thyroid) (See, Measurement of NK Activity in Effector Cells Purified from Canine Peripheral Lymphocytes, Veterinary Immunology and Immunopathology, 35 (1993) 239-251). A cell line treated with an ingredient at a specific concentration is referred to as "treatment" and an untreated sample is referred to as "control." The words "genes" and "probes" are used synonymously in this method. Gene expression was measured for the treatment cell lines and controls. The gene expression data was determined to be either "up" or "down" -regulated for any given treatment. The decision on whether a gene is "up" or "down" is based on the fold change, which is calculated as treatment intensity/control intensity for each individual probe. The fold change is considered down-regulated if its value is < 1/1.5 (for across all 4 cell lines analysis) or < 1/2 (for within cell lines analysis) and is up-regulated if it is > 1.5 (for across all 4 cell lines analysis) or > 2 (for within cell lines analysis).

**Table 4-Gene Expression of Ingredients**

| **Gene Target** | **Ingredient** | **Fold change** | **Amount tested** |
|---|---|---|---|
| NPY5R | Epigallocatechin | -1.33 (in all cell lines tested) | 20 ng/mL, 80 ng/mL |
| | Gallate | -1.82 (in two cell lines tested) | |
| | EPA | 1.56 (in two cell lines tested) | 0.005 mg/mL, 0.025 mg/mL |
| | Luteolin | | 1 uM, 10 uM |
| NPY1R | EPA | -1.43 (in two cell lines tested) | 0.005 mg/mL, 0.025 mg/mL |

## Claims

1. A pet food composition comprising luteolin for use in inducing a satiety response in an animal,
wherein the use comprises feeding the animal the composition,
wherein the luteolin is in an amount effective to decrease expression of one or more genes selected from NPY and NPY receptors, and/or to increase expression of one or more genes selected from leptin and leptin receptors.

2. A pet food composition comprising luteolin for use in controlling the amount of food intake of an animal,
wherein the use comprises feeding the animal the composition,
wherein the luteolin is in an amount effective to decrease expression of one or more genes selected from NPY and NPY receptors, and to increase expression of one or more genes selected from leptin and leptin receptors.

3. The pet food composition for use according to claim 1 or claim 2, wherein the luteolin is in an amount of 0.0003 mg to 0.1 mg, and wherein the animal weighs 2 kg to 60 kg.

4. The pet food composition for use according to any of claims 1 to 3, wherein the animal is a dog.

5. The pet food composition for use according to any preceding claim wherein the pet food composition further comprises:
0-90% by weight carbohydrate;
5-70% by weight protein;
2-50% by weight fat;
0.1-20% by weight total dietary fiber; and
0-15% by weight vitamins and minerals.

6. The pet food composition for use according to any preceding claim wherein the pet food composition is formulated to deliver the nutritional requirements of an animal in the size and age class appropriate to the animal.

7. A pet food composition comprising luteolin in an amount effective to induce a satiety response in an animal weighing from 2 kg to 60 kg, wherein the amount is effective to decrease expression of one or more genes selected from NPY and NPY receptors and/or to increase expression of one or more genes selected from leptin and leptin receptors, and wherein the luteolin is in an amount of 0.0003 mg to 0.1 mg.

8. The pet food composition of claim 7, wherein the pet is a dog.

9. The pet food composition of claim 7 or claim 8, wherein the pet food composition further comprises:
0-90% by weight carbohydrate;
5-70% by weight protein;
2-50% by weight fat;
0.1-20% by weight total dietary fiber; and
0-15% by weight vitamins and minerals.

## Patentansprüche

1. Tierfutterzusammensetzung, die Luteolin beinhaltet, zur Verwendung beim Erzielen einer Sättigungsreaktion in einem Tier,
wobei die Verwendung das Füttern des Tieres mit der Zusammensetzung beinhaltet,
wobei das Luteolin in einer Menge vorliegt, die die Wirkung hat, die Expression von einem oder mehreren Genen, ausgewählt aus NPY und NPY-Rezeptoren, zu verringern und/oder die Expression von einem oder mehreren Genen, ausgewählt aus Leptin und Leptin-Rezeptoren, zu erhöhen.

2. Tierfutterzusammensetzung, die Luteolin beinhaltet, zur Verwendung bei der Kontrolle der Futteraufnahmemenge eines Tieres,
wobei die Verwendung das Füttern des Tieres mit der Zusammensetzung beinhaltet,
wobei das Luteolin in einer Menge vorliegt, die die Wirkung hat, die Expression von einem oder mehreren Genen, ausgewählt aus NPY und NPY-Rezeptoren, zu verringern und/oder die Expression von einem oder mehreren Genen, ausgewählt aus Leptin und Leptin-Rezeptoren, zu erhöhen.

3. Tierfutterzusammensetzung zur Verwendung nach Anspruch 1 oder Anspruch 2, wobei das Luteolin in einer Menge von 0,0003 mg bis 0,1 mg vorliegt und wobei das Tier 2 kg bis 60 kg wiegt.

4. Tierfutterzusammensetzung zur Verwendung nach einem der Ansprüche 1 bis 3, wobei das Tier ein Hund ist.

5. Tierfutterzusammensetzung zur Verwendung nach einem vorherigen Anspruch, wobei die Tierfutterzusammensetzung ferner Folgendes beinhaltet:
0-90 Gew.-% Kohlenhydrat;
5-70 Gew.-% Protein;
2-50 Gew.-% Fett;
0,1-20 Gew.-% Gesamtballaststoffe; und
0-15 Gew.-% Vitamine und Mineralstoffe.

6. Tierfutterzusammensetzung zur Verwendung nach einem vorherigen Anspruch, wobei die Tierfutterzusammensetzung so formuliert ist, dass der Nährstoffbedarf eines Tieres in der für das Tier angemessenen Größen- und Altersklasse zugeführt wird.

7. Tierfutterzusammensetzung, die Luteolin in einer Menge beinhaltet, die die Wirkung hat, eine Sättigungsreaktion in einem Tier zu erzielen, das 2 kg bis 60 kg wiegt, wobei die Menge die Wirkung hat, die Expression von einem oder mehreren Genen, ausgewählt aus NPY und NPY-Rezeptoren, zu verringern und/oder die Expression von einem oder mehreren Genen, ausgewählt aus Leptin und Leptin-Rezeptoren zu erhöhen, und
wobei das Luteolin in einer Menge von 0,0003 mg bis 0,1 mg vorliegt.

8. Tierfutterzusammensetzung nach Anspruch 7, wobei das Tier ein Hund ist.

9. Tierfutterzusammensetzung nach Anspruch 7 oder Anspruch 8, wobei die Tierfutterzusammensetzung ferner Folgendes beinhaltet:
0-90 Gew.-% Kohlenhydrat;
5-70 Gew.-% Protein;
2-50 Gew.-% Fett;
0,1-20 Gew.-% Gesamtballaststoffe; und
0-15 Gew.-% Vitamine und Mineralstoffe.

## Revendications

1. Une composition alimentaire pour animaux de compagnie comprenant de la lutéoline destinée à être utilisée pour induire une réponse de satiété chez un animal,
dans laquelle l'utilisation comprend l'administration de la composition à l'animal,
dans laquelle la lutéoline est dans une quantité efficace pour diminuer l'expression d'un ou de plusieurs gènes sélectionnés parmi NPY et les récepteurs NPY, et/ou pour augmenter l'expression d'un ou de plusieurs gènes sélectionnés parmi la leptine et les récepteurs de leptine.

2. Une composition alimentaire pour animaux de compagnie comprenant de la lutéoline destinée à être utilisée pour réguler la prise alimentaire d'un animal,
dans laquelle l'utilisation comprend l'administration de la composition à l'animal,
dans laquelle la lutéoline est dans une quantité efficace pour diminuer l'expression d'un ou de plusieurs gènes sélectionnés parmi le NPY et les récepteurs de NPY, et pour augmenter l'expression d'un ou de plusieurs gènes sélectionnés parmi la leptine et les récepteurs de leptine.

3. La composition alimentaire pour animaux de compagnie destinée à être utilisée selon la revendication 1 ou la revendication 2, dans laquelle la lutéoline est dans une quantité comprise entre 0,0003 mg et 0,1 mg, et dans laquelle l'animal pèse entre 2 kg et 60 kg.

4. La composition alimentaire pour animaux de compagnie destinée à être utilisée selon l'une quelconque des revendications 1 à 3, dans laquelle l'animal est un chien.

5. La composition alimentaire pour animaux de compagnie destinée à être utilisée selon l'une quelconque des revendications précédentes, dans laquelle la composition alimentaire pour animaux de compagnie comprend en outre :
0 à 90% en poids de glucides ;
5 à 70% en poids de protéines ;
2 à 50% en poids de matières grasses ;
0,1 à 20% en poids de fibres alimentaires totales ; et
0 à 15% en poids de vitamines et de minéraux.

6. La composition alimentaire pour animaux de compagnie destinée à être utilisée selon l'une quelconque des revendications précédentes, dans laquelle la composition alimentaire pour animaux de compagnie est formulée pour satisfaire les besoins nutritionnels d'un animal dans la catégorie de taille et d'âge pertinente à l'animal.

7. Une composition alimentaire pour animaux de compagnie comprenant de la lutéoline dans une quantité efficace pour induire une réponse de satiété chez un animal pesant entre 2 kg et 60 kg, dans laquelle la quantité est efficace pour diminuer l'expression d'un ou de plusieurs gènes sélectionnés parmi NPY et les récepteurs NPY, et/ou pour augmenter l'expression d'un ou de plusieurs gènes sélectionnés parmi la leptine et les récepteurs de leptine, et
dans laquelle la lutéoline est dans une quantité comprise entre 0,0003 mg et 0,1 mg.

8. La composition alimentaire pour animaux de compagnie selon la revendication 7, dans laquelle l'animal de compagnie est un chien.

9. La composition alimentaire pour animaux de compagnie selon la revendication 7 ou la revendication 8, dans laquelle la composition alimentaire pour animaux de compagnie comprend en outre :
0 à 90% en poids de glucides ;
5 à 70% en poids de protéines ;
2 à 50% en poids de matières grasses ;
0,1 à 20% en poids de fibres alimentaires totales ; et
0 à 15% en poids de vitamines et de minéraux.
